# DEMANDE DE BREVET EUROPEEN

(11) **EP 0 887 375 A1**
(43) Date de publication de la demande: **30.12.1998**
(21) Numéro de dépôt: 98111116.4
(22) Date de dépôt: 17.06.1998
(51) Int. Cl.: C08K 5/3417, C08L 23/10

(54) **Composition de polypropylène contenant un agent nucléant beta**

(30) Priorité: 24.06.1997 FR 9707858
(71) Demandeur: ELF ATOCHEM S.A., 92800 Puteaux, Hauts-de-Seine (FR)
(72) Inventeur: Berson, Anne-Lise, 64000 Pau (FR); Claverie, Francis, 64300 Bonnut (FR); Drujon, Xavier, 64110 Jurancon (FR); Lotz, Bernard, 67000 Strasbourg (FR); Wittmann, Jean-Claude, 67370 Pfulgriesheim (FR); Thierry, Annette, 67200 Strasbourg (FR)

(57) **Abrégé**

L'invention concerne une composition de polypropylène contenant au moins un agent nucléant capable d'induire la cristallisation de la forme cristalline β choisi dans le groupe constitué par les sels de calcium des imido-acides.

## Description

L'invention concerne une composition comprenant un polymère ou un copolymère du propylène et au moins un agent nucléant capable d'induire notamment la cristallisation de la forme cristalline β.

On sait que les polymères oléfiniques présentent une structure cristalline qui leur confère certaines propriétés mécaniques et optiques particulières très appréciées dans de nombreuses applications industrielles (emballage, flaconnage, pare chocs pour automobile).

Ces propriétés mécaniques et optiques dépendent dans une large mesure de la microstructure du polymère. En général, le polymère fondu se cristallise en refroidissant sous la forme de sphérolites, lesquels comprennent des domaines amorphes et cristallins.

On sait que l'emploi de certains agents dits de "nucléation" désignés communément agents nucléants favorisent la création des germes de cristallisation supplémentaires au cours du refroidissement d'un polymère. Cette augmentation des germes de cristallisation produit un plus grand nombre de sphérolites ce qui entraîne une réduction de leurs dimensions et permet d'augmenter la température de cristallisation. Cette diminution de la taille des sphérolites entraîne une modification des propriétés mécaniques : augmentation du module de flexion, de la température de déformation sous charge mais aussi fragilisation avec une diminution des propriétés chocs surtout à froid.

Ces agents nucléants sont plus particulièrement utilisés dans les polymères ou les copolymères statistique ou "bloc" du propylène.

On sait également que les polypropylènes (homopolymère, copolymère ou copo "bloc") peuvent cristalliser sous quatre formes cristallines distinctes α, β, γ et δ, ainsi que sous la forme smectique qui est obtenue par trempe du polymère fondu. La forme cristalline β se distingue de la forme a qui est naturellement majoritaire dans les polypropylènes par une température de fusion inférieure, une densité plus faible, et une ductilité plus importante qui est intéressante du point de vue applicatif.

Les propriétés mécaniques des polypropylènes dépendent donc à la fois de la taille des sphérolites et des formes cristallines présentes dans ces mêmes sphérolites. Pour obtenir le meilleur compromis entre propriétés choc et rigidité pour une application donnée, il est donc nécessaire de contrôler ces deux paramètres.

On peut notamment induire la formation de la forme β en cristallisant le polymère dans un gradient de température, mais ce procédé est long et peu efficace. On préfère employer pour induire la formation de la forme β un agent nucléant spécifique, dont plusieurs sont connus.

Parmi les agents nucléants spécifiques de la forme β, on connaît notamment la γ-quinacridone (polymer Letters, 6, 539-546 (1968)), des sels de calcium de diacides carboxyliques synthétisés (DE-A-3610644) ou préparés in situ (EP 0 682 066).

L'utilisation de la γ-quinacridone nécessite une procédure particulière pour disperser l'agent dans le polymère et présente l'inconvénient de colorer le produit d'une teinte rosâtre.

La demande de brevet EP 0 682 066 décrit l'utilisation des sels de diacides carboxyliques, tel que le pimelate de calcium, préparés in-situ lors de l'extrusion granulation du mélange. Cette façon d'opérer nécessite beaucoup de soin pour assurer la dispersion des ingrédients dans le polymère. Même si on utilise directement un sel de diacide carboxylique, on observe certes une forte proportion de forme cristalline β, mais l'effet nucléant est assez faible. Il n'y a pas d'augmentation significative de la température de cristallisation et le module de flexion diminue. De plus, on obtient facilement un dépôt en extrusion soufflage en raison de la décomposition puis dévolatilisation d'une partie du sel du diacide carboxylique.

Le brevet FR 2656620 concerne des compositions de résines polyoléfines contenant au moins un agent nucléant choisi dans le groupe constitué par les aminoacides, les imido-acides et les acides pyridinequinoléine-et acridine-carboxyliques. Tous ces composés permettent d'augmenter la température de cristallisation des compositions de résine polyoléfiniques les contenant, et sont des agents nucléants spécifiques de la forme α du polypropylène isotactique.

On a maintenant trouvé que l'on pouvait utiliser comme agent nucléant β des polymères ou des copolymères du propylène certains sels des métaux du second groupe IIa du système périodique des éléments des imido-acides de formule (I) 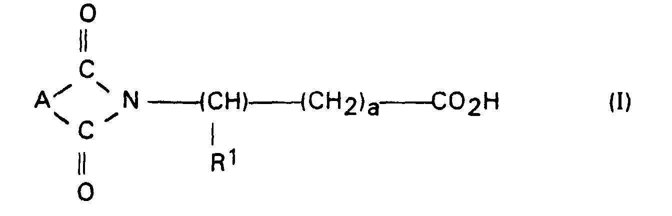 dans laquelle R¹ représente un atome d'hydrogène, un radical hydrocarboné aliphatique linéaire ou ramifié ayant jusqu'à 12 atomes de carbone, un radical phényle, un radical benzyle, un radical cyclohexyle, un radical carboxyle ;
a est un nombre allant de 0 à 12, A représente un radical divalent de formules : 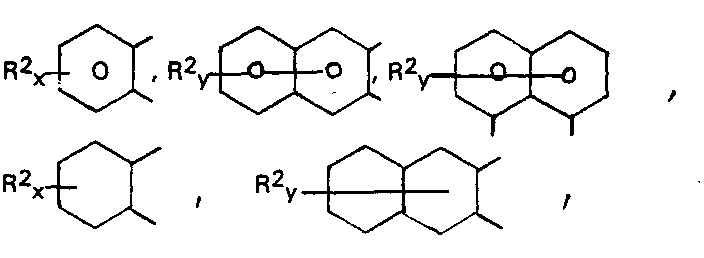 dans lesquelles R² représente un atome d'hydrogène, un radical hydrocarboné aliphatique linéaire ou ramifié renfermant de 1 à 12 atomes de carbone, un atome d'halogène ;
x est un nombre entier allant de 1 à 4,
y est un nombre entier allant de 1 à 6.

Quand x et y sont > 1, les différents radicaux représentés par R² peuvent être identiques ou différents.

Parmi les composés de formule (I) , on préfère ceux dans lesquels R¹ représente un atome d'hydrogène, un radical méthyle, a est nul et A représente un radical divalent tel que 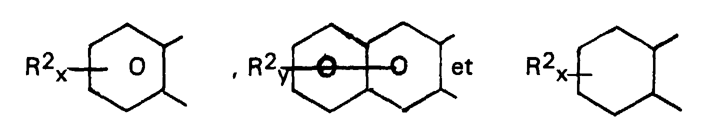 dans lesquels R² représente un atome d'hydrogène, un radical hydrocarboné aliphatique linéaire tel que méthyle, éthyle ou propyle.

Parmi ces produits, on citera plus particulièrement la phtaloylglycine, l'hexahydrophtaloylglycine, la naphtoylglycine, la N-phtaloyle alanine, la N-4-méthylphtaloylglycine.

Parmi les métaux du groupe IIa utilisables selon la présente invention, on citera le magénium, le calcium et le baryum. Parmi ces métaux, on préfère utiliser tout particulièrement le calcium.

L'invention concerne tout particulièrement l'application des sels de métal du groupe IIa des imido-acides tels que mentionnés précédemment comme agents nucléants β qui augmentent le taux de la forme cristalline β des polymères ou des copolymères du propylène.

De préférence, on utilisera le sel de calcium de la phtaloylglycine (ou acide 1,3-dioxo 2-isoindoline acétique).

L'invention concerne donc les compositions comprenant au moins un polymère ou un copolymère du propylène et au moins un sel de métal du second groupe IIa d'imido-acide tel que défini ci-avant.

Le taux de forme cristalline β peut être déterminé par analyse DSC sur un instrument PERKIN-ELMER THERMAL ANALYSlS SYSTEM, par intégration des pics de fusion obtenus à environ 155°C pour la forme β et à 165°C pour la forme α à une vitesse de chauffe de +20°C par minute, soit après recristallisation de l'échantillon depuis l'état fondu à une vitesse de refroidissement de -10°C par minute, soit en première fusion.

Les agents nucléants β de la présente invention permettent d'obtenir un taux de forme cristalline β supérieur à 70 % selon la méthode DSC après recristallisation de l'échantillon depuis l'état fondu à une vitesse de -10°C/mn.

Ce taux est maintenu lorsque la composition selon l'invention renferme également d'autres additifs tels que des pigments, des stabilisants vis-à-vis des rayons ultraviolets, des agents de démoulage, des stabilisants contre la dégradation thermique, des agents lubrifiants, des ignifugeants et/ou des matières de charge, telles que notamment des fibres de verre, des agents anti-acide.

Selon la présente invention, on désigne par polymères ou copolymères du propylène les homopolymères du propylène ou les copolymères du propylène et d'au moins une monooléfine de formule CH₂ = CH - W dans laquelle W représente un atome d'hydrogène, un radical hydrocarboné substitué ou non ayant un nombre de carbone allant de 2 à 10.

A titre d'illustration de copolymères du propylène, on citera plus particulièrement, les copolymères d'éthylène et de propylène ayant une proportion molaire d'éthylène compris entre 0,5 et 30 % et de préférence entre 1 et 5% ; les copolymères blocs d'éthylène et de propylène ayant une proportion molaire d'éthylène comprise entre 1 % et 10 %.

Les agents nucléants β selon l'invention sont incorporés avantageusement entre 0,005 % et 1 % et de préférence, entre 0,025 % et 0,5 % en poids par rapport au poids total des polymères ou des copolymères du propylène.

Les agents nucléants β selon la présente invention peuvent être préparés par toute méthode de synthèse appropriée. Notamment, on peut préparer un sel de sodium dudit imido-acide (I) mentionné précédemment puis effectuer une réaction de double décomposition avec un sel inorganique du groupe IIa tel que CaCO₃, Ca(NO₃)₂.

Les compositions de polymères ou de copolymères du propylène selon l'invention peuvent être préparées par exemple en mélangeant à sec les granulés ou les poudres de polymère, un ou plusieurs agents nucléants de l'invention, et éventuellement les divers additifs et charges précités à température ambiante pendant une durée qui peut atteindre 1 heure.

Ce mélange à sec est avantageusement suivi d'une extrusion/granulation pour obtenir une bonne dispersion des additifs à une température pouvant être comprise entre 170°C et 230°C puis moulé, par exemple par injection à une température généralement de l'ordre de 190°C à 250°C.

On ne sortirait pas du cadre de l'invention si les agents nucléants β de la présente invention étaient préparés in situ, au moment où l'on prépare les compositions de polymères ou de copolymères du propylène de la présente invention.

A cet effet, la composition peut contenir avantageusement un sel de métal du second groupe IIa d'acide gras tel que notamment le stéarate de calcium en une quantité telle que la totalité de l'imido-acide de formule (I) introduit soit salifié.

Un autre objet de l'invention est de réaliser des compositions de polymères ou de copolymères du propylène comprenant simultanément au moins un sel de métal du second groupe IIa de l'imido-acide (I) et l'imidoacide (I) lui-même.

Ces compositions peuvent être avantageusement obtenues selon le mode préféré qui consiste à réaliser comme décrit précédemment l'agent nucléant β in situ avec la différence que l'on utilise une quantité de sel de métal du second groupe IIa d'acide gras moindre de façon à salifier partiellement l'imido-acide (I).

La présence simultanée des composés de formule (I) salifiés et de leur forme acide permet à la fois d'améliorer notamment la résistance aux chocs des polymères ou des copolymères du propylène tout en augmentant leur module de flexion.

Les exemples qui suivent illustrent l'invention.

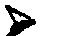 PREPARATION DES COMPOSITIONS SELON L'INVENTION :

Les compositions ont été préparées en utilisant les matières suivantes :
- poudre d'un homopolymère du propylène P1 ayant un indice de fluidité de 2 g/10 min (charge 2,16 kg à 230°C) ;
- poudre d'un copolymère bloc propylène-éthylène P2 ayant une proportion molaire d'éthylène égale à 7,7 % et ayant un indice de fluidité de 6 g/min (charge 2,16 kg à 230°C) ;
- un mélange d'IRGAFOS 168 (1 partie) qui est le tris(ditert-butyl-2,4phényl)-phosphite et d'IRGANOX 1010 (1 partie) qui est un phénol encombré commercialisé par la Société CIBA-GEIGY sous la dénomination IRGANOX® B225 utilisé comme antioxydant ;
- une hydrotalcite de formule Mg_{4,5}Al₂(OH)₁₃CO₃3,5H₂O commercialisé par la société KYOWA CHEM.IND. sous la dénomination DHT4A utilisé comme anti-acide ;
- stéarate de calcium,
- la phthaloylglycine, ci-après désignée comme PG.
- sel de calcium de la phtaloylglycine ci-après désigné par PG₂ Ca. Ce sel de calcium a été obtenu à partir du sel de sodium de la phtaloylglycine sur lequel on a fait réagir le nitrate de calcium.

Les compositions selon l'invention ont été préparées de la manière suivante :

(Les pourcentages indiqués sont exprimés en poids par rapport au poids total du polymère ou du copolymère du propylène).

On mélange au sac à sec pendant une minute :
- une poudre de polypropylène P1 ou P2,
- 0,150 % d'IRGANOX B225,
- l'agent nucléant,
- le stéarate de calcium (ci-après désigné par StCa),
- le DHT4A.

On alimente ensuite avec ce mélange une extrudeuse bi-vis contrarotative HAAKE Rheocord-System, à une vitesse : 35-40 tours par minute, ayant le profil de température suivante : 190°C-210°C-210°C et une température de filière de 215°C.

Les granulés obtenus sont moulés par injection sur une presse BILLION Visumat 5001, 90 Tonnes, en éprouvettes normalisées pour déterminer le module de flexion, le choc Charpy et la température de fléchissement sous charge.
Température d'injection : 225°C.
Vitesse de la vis : 150 tours par minute.
Température du moule : 30°C ou 70°C.
Vitesse d'injection : 10 tours par minute.
Temps de refroidissement : 35 secondes.
Temps de cycle : 45 secondes.

Les compositions de l'invention sont évaluées de la manière suivante :
- le module de flexion exprimé en MPa est déterminé selon la norme ISO 178 sur des éprouvettes de dimensions 120 x 10 x 4 mm avec une charge de 0,45 MPa au Dynamomètre Adamel Lhomargy.
- le choc Charpy est déterminé selon la norme ISO 179.
- le taux de forme β est déterminé par DSC sur un instrument Perkin-Elmer DSC 7 dont les thermogrammes sont analysés par un "Thermal Analysis Data System" (TADS), par intégration des pics de fusions obtenus à environ 155°C pour la forme β et à environ 165°C pour la forme α à une vitesse de chauffe de + 20°C/minute, soit après recristallisation de l'échantillon depuis l'état fondu à une vitesse de refroidissement de -10°C/min (méthode 1), soit en première fusion (méthode 2).

On reporte la température de fusion, mesurée au sommet du pic, la température de recristallisation, mesurée à l'onset et le pourcentage de forme α ou forme β obtenu par intégration des pics de fusion.

Les résultats des différents essais effectués avec les poudres P1 et P2, le sel de calcium de la phtaloylglycine (PG₂Ca) et la phtaloylglycine (PG) sont reportés dans le tableau 1 ci-après.

Dans ce tableau 1, T signifie témoin.

Les essais 2 et 3 sont réalisés avec le sel de calcium de la phtaloylglycine (PG₂Ca) préalablement préparé.

Dons les essais 4 et 9, la phtaloylglycine est totalement salifiée par le stéarate de calcium in situ.

Dans les essais 5, 6 et 8, la phtaloylglycine est partiellement salifiée par le stéarate de calcium in situ.

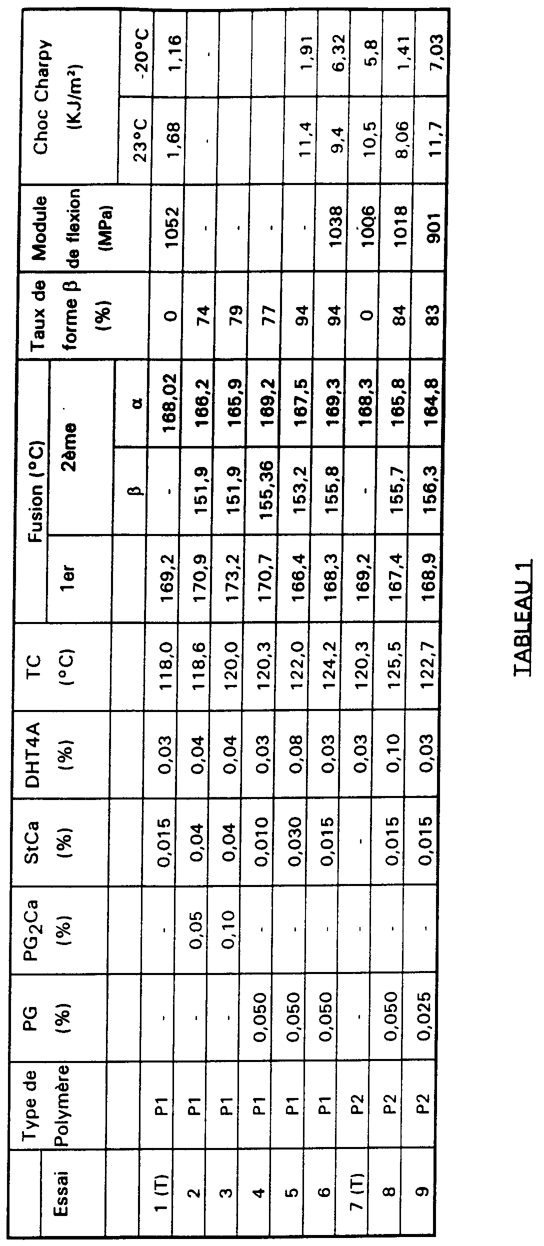

## Revendications

1. Utilisation des sels des métaux du second groupe IIa du système périodique des éléments des imido-acides de formule (I) : 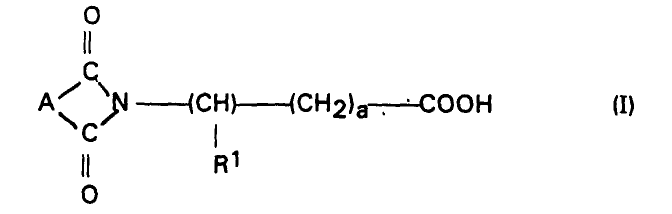 dans laquelle R¹ représente un atome d'hydrogène, un radical hydrocarboné aliphatique linéaire ou ramifié et ayant jusqu'à 12 atomes de carbone, un radical phényle, un radical benzyle, un radical cyclohexyle, un radical carboxyle ;
a est un nombre allant de 0 à 12,
A représente un radical divalent de formules : 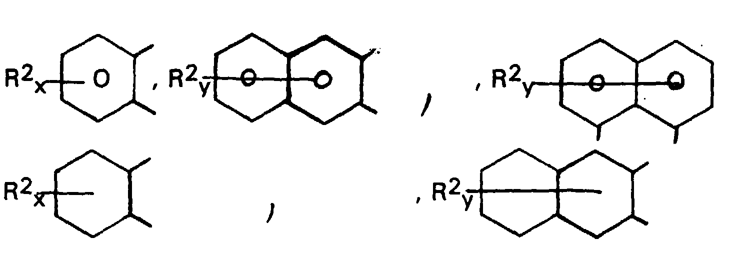 dans lesquelles R² représente un atome d'hydrogène, un radical hydrocarboné aliphatique linéaire ou ramifié renfermant de 1 à 12 atomes de carbone, un atome d'halogène ;
x est un nombre entier allant de 1 à 4,
y est un nombre entier allant de 1 à 6, en tant qu'agents nucléants β des polymères et copolymères du propylène.

2. Utilisation selon la revendication 1, caractérisée en ce que l'agent nucléant β est le sel de calcium de la phtaloylglycine.

3. Utilisation selon l'une des revendications 1 ou 2, caractérisée en ce que les agents nucléants β sont incorporés à raison de 0,005 % à 1 % en poids par rapport au poids total des polymères ou des copolymères du propylène.

4. Utilisation selon la revendication 3, caractérisée en ce que les agents nucléants β sont incorporés à raison de 0,05 % à 0,5 % en poids par rapport au poids total des polymères ou des copolymères du propylène.

5. Utilisation selon l'une des revendicaitons 1 à 4, caractérisée en ce que les polymères ou les copolymères du propylène sont des homopolymères du propylène ou des copolymères du propylène et d'au moins une monooléfine de formule CH₂ = CH - W dans laquelle W représente un atome d'hydrogène, un radical hydrocarboné substitué ou non ayant un nombre de carbone allant de 2 à 10.

6. Utilisation selon la revendication 5, caractérisée en ce que les polymères du propylène sont des homopolymères du propylène.

7. Utilisation selon la revendication 5, caractérisée en ce que les copolymères du propylène sont des copolymères d'éthylène et de propylène, ou des copolymères bloc d'éthylène et de propylène.

8. Utilisation selon la revendication 7, caractérisée en ce que les copolymères d'éthylène et de propylène contiennent une proportion molaire d'éthylène allant de 0,5 % à 30 % et de préférence de 1 % à 5 %.

9. Utilisation selon la revendication 7, caractérisée en ce que les copolymères bloc d'éthylène et de propylène contiennent une proportion molaire d'éthylène allant de 1 % à 10 %.

10. Préparation d'une composition de polymère ou de copolymère du propylène comprenant au moins un polymère ou un copolymère du propylène et au moins un agent nucléant β choisi parmi les sels des métaux du second groupe IIa du système périodique des éléments des imido-acides de formule (I) : 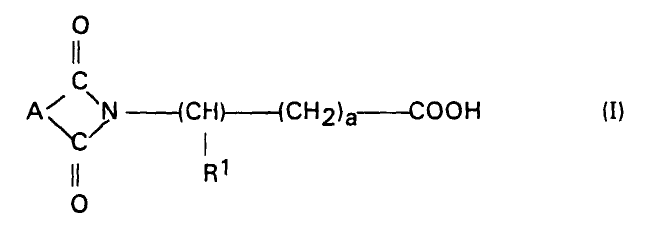 dans laquelle R¹ représente un atome d'hydrogène, un radical hydrocarboné aliphatique linéaire ou ramifié et ayant jusqu'à 12 atomes de carbone, un radical phényle, un radical benzyle, un radical cyclohexyle, un radical carboxyle ;
a est un nombre allant de 0 à 12,
A représente un radical divalent de formules : 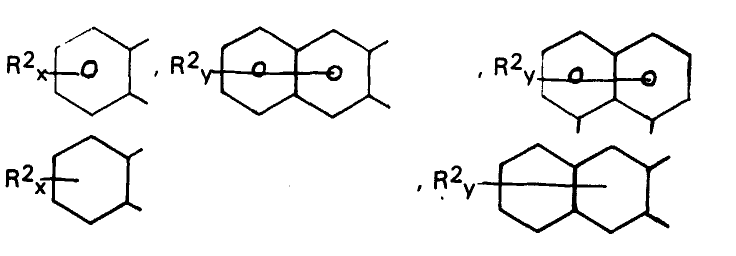 dans lesquelles R² représente un atome d'hydrogène, un radical hydrocarboné aliphatique linéaire ou ramifié renfermant de 1 à 12 atomes de carbone, un atome d'halogène ;
x est un nombre entier allant de 1 à 4,
y est un nombre entier allant de 1 à 6 ; par malaxage à une température comprise entre 170°C et 230°C d'un mélange comprenant au moins un polymère ou un copolymère du propylène et au moins un agent nucléant β.

11. Préparation d'une composition de polymère ou de copolymère du propylène comprenant au moins un polymère ou un copolymère du propylène, au moins un imino-acide de formule (I) et au moins un sel de métal du second groupe IIa d'un acide gras par malaxage à une température comprise entre 170°C et 230°C d'un mélange comprenant au moins un polymère ou un copolymère du propylène, au moins un imidoacide de formule (I) et une quantité d'un sel de métal du second groupe IIa d'un acide gras telle que l'imido-acide de formule (I) est totalement salifié.

12. Composition de polymère ou de copolymère du propylène comprenant au moins un polymère ou un copolymère du propylène, au moins un sel de métal du second groupe IIa de l'imido-acide de formule (I) et l'imido-acide de formule (I).

13. Composition selon la revendication 12, obtenue par malaxage à une température comprise entre 170°C et 230°C d'un mélange comprenant au moins un polymère ou un copolymère du propylène, au moins un imido-acide de formule (I) et au moins un sel de métal du second groupe IIa d'un acide gras utilisé en une quantité telle que l'imido-acide de formule (I) est partiellement salifié.

14. Composition selon l'une quelconque des revendications 11 et 13, caractérisée en ce que le sel de métal du second groupe IIa d'un acide gras est le stéarate de calcium.
